# EUROPÄISCHE PATENTSCHRIFT

(11) **EP 2 517 534 B1**
(45) Veröffentlichungstag und Bekanntmachung des Hinweises auf die Patenterteilung: **14.03.2018**
(21) Anmeldenummer: 10796049.4
(22) Anmeldetag: 21.12.2010
(51) Int. Cl.: H05B 33/08

(54) **BETRIEB ORGANISCHER LEUCHTDIODEN MITTELS PULSWEITEMODULATION**
OPERATION OF ORGANIC LIGHT EMITTING DIODES BY MEANS OF PULSE WIDTH MODULATION
FONCTIONNEMENT DE DIODES ÉLECTROLUMINESCENTES ORGANIQUES PAR MODULATION D'AMPLITUDE D'IMPULSION

(30) Priorität: 21.12.2009 DE 102009055048
(43) Veröffentlichungstag der Anmeldung: 31.10.2012
(73) Patentinhaber: Tridonic AG, 8755 Ennenda (CH)
(72) Erfinder: PEREIRA, Eduardo, CH-8854 Siebnen (CH); ZIMMERMANN, Michael, CH-8888 Heiligkreuz (CH)
(74) Vertreter: Rupp, Christian
(86) Internationale Anmeldenummer: PCT/EP2010/070403
(87) Internationale Veröffentlichungsnummer: WO 2011/085927

(56) Entgegenhaltungen:
- EP-A1- 1 973 385
- DE-A1-102009 000 289
- US-A1- 2003 071 821
- US-A1- 2009 121 642
- US-B1- 6 310 589

## Beschreibung

Die vorliegende Erfindung bezieht sich auf Verfahren und Schaltungen zum Betrieb von organischen Leuchtdioden mittels Pulsweitemodulation. Insbesondere nutzt die vorliegende Erfindung parasitäre Kapazitäten organischer Leuchtdioden vorteilhaft zum Betrieb von diesen aus.

Eine organische Leuchtdiode, kurz OLED (Kurzform für Englisch "Organic Light-Emitting Diode"), ist ein dünnfilmiges, leuchtendes Bauelement aus organischen, halbleitenden Materialien, das sich von den anorganischen Leuchtdioden (LED) dadurch unterscheidet, dass Stromdichte und Leuchtdichte geringer sind und keine einkristallinen Materialien erforderlich sind. Da OLEDs auf fast jedes Material gedruckt werden können, bieten sie gegenüber der LCD-Technologie eine signifikante Kostenersparnis. Für OLEDs können auch biegsame Trägermaterialien (flexible Substrate, Folien) verwendet werden, wodurch völlig neue Möglichkeiten eröffnet werden.

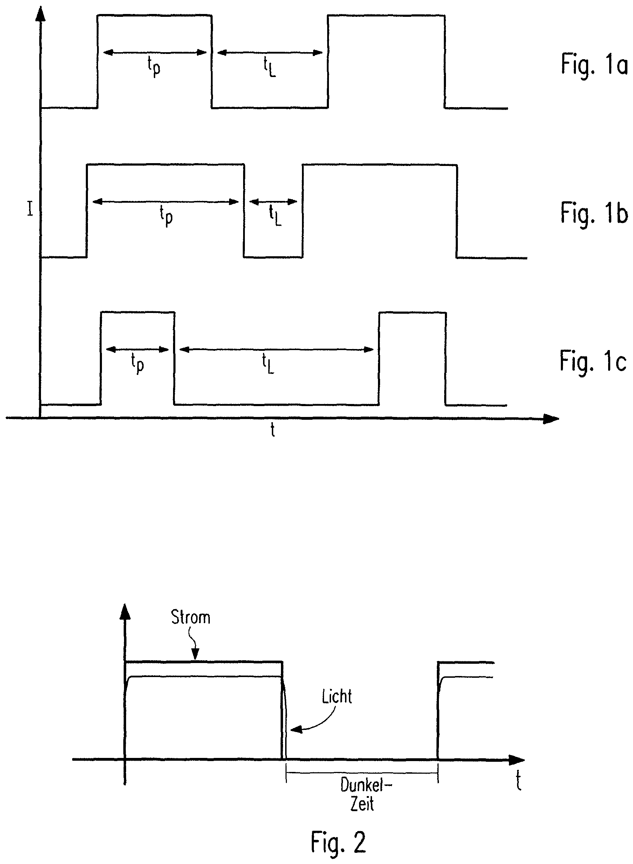

Zum Betreiben von OLEDs werden Treiberschaltungen verwendet. Dabei werden die OLEDs häufig mittels Pulsweitemodulation betrieben. Bei der Pulsweitemodulation (PWM) wird eine technische Größe, zum Beispiel der elektrische Strom mit dem die OLED versorgt wird, zwischen zwei diskreten Werten hin- und hergewechselt. Fig. 1a zeigt den elektrischen Strom, der auf der Ordinate aufgetragen ist gegenüber der Zeit, die auf der Abszisse aufgetragen ist. Dabei wechseln sich jeweils PWM-Strompulse einer Pulsbreite tp mit PWM-Lücken einer Pulsbreite t_{L} in einer vorgegebenen Frequenz ab. Während der PWM-Stromimpulse leuchtet die OLED, wobei während der PWM-Lücken eine sogenannte Dunkelzeit entsteht. Aus dem Verhältnis der Breiten tp und t_{L} ergibt sich die mittlere Leuchtstärke der OLED. Die Frequenz ist üblicherweise so hoch eingestellt, dass das menschliche Auge kein Flimmern erkennt, sondern nur eine konstante, einheitliche Leuchtstärke der OLED wahrnimmt.

Das PWM-Verfahren ist insbesondere vorteilhaft zum Dimmen von OLEDs. Dabei muss lediglich das Verhältnis der Pulsbreiten tp und t_{L} verändert werden. In Fig. 1b ist zum Beispiel gezeigt, wie durch einen breiteren PWM-Strompuls und eine schmälere PWM-Lücke eine größere mittlere Leuchtstärke der OLED erreicht wird. Im Gegensatz dazu zeigt die Fig. 1c wie durch einen schmäleren PWM-Strompuls und eine breitere PWM-Lücke eine niedrigere mittlere Leuchtstärke der OLED eingestellt werden kann. So können einfach und linear unterschiedliche mittlere Leuchtstärken bzw. Helligkeiten der OLED eingestellt werden.

In Fig. 2 ist gezeigt, wie sich die Leuchtstärke bzw. Helligkeit einer anorganischen LED, die mit PWM betrieben wird im zeitlichen Verlauf darstellt. Bei eingeschaltetem Betriebsstrom, das heißt während des PWM-Strompulses, leuchtet die LED mit maximaler Stärke. Während der PWM-Lücke entsteht dagegen eine ausgeprägte Dunkelzeit. Die Leuchtstärke der LED folgt dabei mehr oder weniger instantan dem PWM-Signal. Dadurch wird die Dunkelzeit maximal lang.

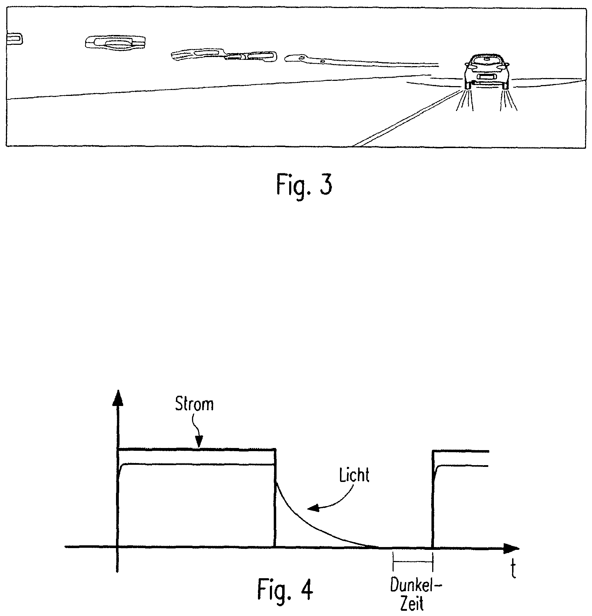

Mit PWM betriebene LEDs und herkömmliche Leuchtmittel sind anfällig dafür den nachteiligen sogenannten Perlschnureffekt (Kurzform BEF für Englisch: "Beads Effect") zu zeigen. Der BEF entsteht, wenn eine relative Bewegung der LED mit einer ausreichend langen Dunkelzeit kombiniert wird. Als Konsequenz erkennt die Retina des menschlichen Auges mehrere Bilder, wodurch der BEF zustande kommt. Fig. 3 zeigt zum Beispiel eine mit PWM betriebene Straßenbeleuchtung, zu der sich ein Betrachter relativ bewegt. Der BEF, das heißt die Verschmierung der Beleuchtung in mehrere Bilder, ist gut zu erkennen.

US 2009/121642 A1 betrifft einen Treiber für eine organische Licht emittierende Diode. Dabei wird eine Pulsbreitenmodulation eines Steuerstroms für eine organische Licht emittierende Diode durch eine Schaltung durchgeführt, welche mit entsprechenden Signalen (CONTROL, SAMPLE, V-RAMP) beaufschlagt wird.

Die Erfinder der vorliegenden Erfindung haben festgestellt, dass sich das Verhalten einer PWM-betriebenen OLED grundlegend von einer PWM-betriebenen LED oder einem anderen PWM-betriebenen Leuchtmittel verhält. Dies liegt daran, dass OLEDs, im Vergleich zu LEDs oder anderen Leuchtmitteln, einen deutlich größeren Wert an parasitären Kapazitäten aufweist. Die Kapazität der OLED ist aufgrund ihres Formfaktors, das heißt wegen ihrer planaren Ausdehnung, relativ hoch. Außerdem beeinflusst auch noch die Dicke der organischen Schicht zwischen den Elektroden, die in etwa 100 nm dick ist, die Kapazität der OLED. Insgesamt erreichen OLEDs in etwa Werte zwischen 200 und 400 pF/mm². Aufgrund der hohen Kapazität der OLED kann die OLED auch nach Ende der PWM-Strompulse durch das Entladen der Kapazität nachleuchten.

Fig. 4 zeigt den unterschiedlichen Helligkeitsverlauf einer PWM-betriebenen OLED. Wie in Fig. 2 für eine LED wird der Strom zwischen PWM-Strompulsen und PWM-Lücken mit einer festen Frequenz geschaltet. Das Licht der OLED folgt allerdings nicht wie bei der LED diesem Strommuster instantan, sondern klingt langsam ab. Dadurch entsteht eine kürzere absolute Dunkelzeit während der PWM-Lücken.

Die Aufgabe der vorliegenden Erfindung ist es, dieses entdeckte Verhalten von OLEDs vorteilhaft auszunutzen, um dadurch den Betrieb von OLEDs im Vergleich zum Stand der Technik zu verbessern. Beispielweise ist wünschenswert, eine Schaltung oder ein Verfahren bereitzustellen, das einen BEFreduzierten Betrieb der OLEDs ermöglicht. Des Weiteren wird angestrebt, Lichtfluktuationen oder Veränderungen in der Farbcharakteristik der OLEDs zu vermeiden.

Diese Aufgabe wird erfindungsgemäß durch die Merkmale der unabhängigen Ansprüche gelöst. Die abhängigen Ansprüche geben weitere Ausbildungen der Erfindung an.

Die unabhängigen Ansprüche der vorliegenden Erfindung nützen daher den entdeckten Effekt vorteilhaft aus und verbessern den Betrieb von OLEDs im oben genannten Sinne.

Die Erfindung betrifft ein Verfahren zum Betrieb wenigstens einer OLED mittels PWM, wobei eine oder mehrere steigende oder fallende Flanken am Beginn oder Ende eines PWM-Strompulses der OLED direkt oder indirekt erfasst werden. Die Stromversorgung der OLED wird abhängig von dem erfassten Verlauf der Flanken eingestellt. Insbesondere kann der Strom zu Beginn einer jeden Einschaltflanke jedes PWM-Impulses höher gewählt werden ("Boost") als im weiteren Verlauf der Flanke und/oder im stationären Bereich des PWM-Impulses. Somit werden die Kapazitäten beschleunigt geladen.

Der Verlauf der Flanken wird also vorzugsweise nicht nur direkt oder indirekt, diskret mit wenigstens einem Messpukt oder kontinuierlich, gemessen, sondern auch als zurückgeführter Istwert einer Flankenregelung verwendet, um den Flankenverlauf auf eine Sollkurve zu regeln.

Es kann ein Sollverlauf der Flanke vorgeben werden, den die Stromversorgung durch Regelung versucht, nachzufahren. Dieser Sollverlauf kann bspw. ein konstanter ansteigender Gradient der Flanke sein, vorzugsweise unabhängig von der konkret angesteuerten OLED und somit von der vorliegenden Kapazität. Der Regelung überlaqert werden kann natürlich ein vorgegebener Maximalwert für den Strom.

Dadurch, dass durch die Erfassung der steigenden oder fallenden Flanken deren Verlauf bekannt ist und die Stromversorgung abhängig vom Verlauf eingestellt wird, kann zum Beispiel der oben genannte BEF verringert oder ganz vermieden werden. Dies ist möglich, da mit der Stromversorgung beziehungsweise dem Einstellen des Verhältnisses der Breiten tp zu t_{L}, der PWM-Strompulse zu den PWM-Lücken, die Dunkelzeit verringert werden kann.

Vorteilhafterweise wird der Verlauf der Flanken kontinuierlich erfasst, oder wird durch eine oder mehrere diskrete Messungen, beispielsweise zum Zeitpunkt einer definierten Verzögerung nach dem Abschalten des PWM- Strompulses, erfasst.

Eine kontinuierliche Erfassung der Flanken ermöglicht eine exakte Bestimmung des Verlaufs und damit eine exakte Einstellung der Stromversorgung. Durch eine oder mehrere diskrete Messungen kann die Messung deutlich beschleunigt werden, wobei allerdings je nach abnehmender Anzahl der Messpunkte die Genauigkeit der Bestimmung des Verlaufs der Flanken abnimmt. Da allerdings das prinzipielle Verhalten der Flankens aufgrund parasitärer Kapazitäten bekannt ist, kann auch schon mit z.B. einem Startwert und einem weiteren Punkt nach Abschalten des PWM-Strompulses eine relativ gute Abschätzung des Verlaufs erreicht werden.

Vorteilhafterweise werden zukünftige PWM-Strompulse eingestellt.

So können zum Beispiel abhängig vom Verlauf der Flanken verschiedene mittlere Helligkeit oder auch verschiedene gewünschte Dunkelzeiten in den PWM-Lücken erhalten werden.

Vorteilhafterweise wird der Verlauf der Flanken schaltungstechnisch direkt eingestellt, oder der Verlauf der Flanken wird schaltungstechnisch geregelt, indem ein vorgegebener Sollwert des Verlaufs mit einem Ist-Verlauf verglichen wird.

Durch ein direktes Einstellen kann ein fester Verlauf der Flanken ausgebildet werden und keine weiteren Regelschritte sind mehr notwendig. Eine flexible Regelung, bei der der Ist-Verlauf, das heißt der momentan erfasste Verlauf der Flanken, mit einem (vorbestimmten und gegebenenfalls gespeicherten) Sollwert verglichen wird und je nach Ergebnis des Vergleichs geregelt wird, bedarf mehr schaltungstechnischen Aufwands, ermöglicht es allerdings unterschiedliche Sollwerte problemlos und flexibel einzustellen. Dadurch wird das Verfahren breiter anwendbar und anpassungsfähiger.

Vorteilhafterweise werden die Flanken der OLED direkt mittels eines Lichtsensors gemessen.

So kann die genaueste, weil direkteste, Erfassung der Flanken erreicht werden.

Vorteilhafterweise werden die Flanken der OLED indirekt anhand einer Messung der an der OLED abfallenden Spannung, oder anhand einer Messung von charakteristischen Parametern der OLED und einem Vergleich mit entsprechenden vorher gespeicherten Referenzparametern bestimmt.

Durch eine indirekte Bestimmung, wie zum Beispiel einer Messung der abfallenden Spannung an der OLED, kann durch eine einfache und kostengünstige Implementierung eine relativ präzise Erfassung der Flanken erreicht werden. Durch Speicherung von charakteristischen Parametern kann weiterhin die Genauigkeit erhöht werden, indem zum Beispiel mehrere Parameter miteinander kombiniert werden. Die Erfassung der Flanken kann dabei auch durchgeführt werden, falls äußeres Licht die Erfassung der Flanken mittels eines Lichtsensors stören würde.

Vorteilhafterweise wird die OLED so betrieben, dass ihre Leuchtstärke während der PWM-Lücken stets über einem vorbestimmten ersten Schwellenwert liegt, indem beispielsweise die Breite der PWM-Lücken begrenzt wird.

Durch eine Begrenzung der Breite der PWM-Lücken kann verhindert werden, dass die Leuchtstärke auf 0 absinkt. Dadurch entsteht folglich auch keine Dunkelzeit. Dies wiederum unterdrückt das Auftreten des oben beschriebenen BEF.

Vorteilhafterweise wird die OLED so betrieben, dass für eine gewünschte mittlere Leuchtstärke stets die kleinstmögliche PWM-Lücke eingestellt wird.

Für eine gewünschte mittlere Leuchtstärke gibt es verschiedene Möglichkeiten ein bestimmtes entsprechendes Verhältnis zwischen den Breiten der PWM-Strompulse und den Breiten der PWM-Lücken einzustellen. Wird jedoch die kleinstmögliche PWM-Lücke eingestellt, das heißt für eine mittlere gewünschte Leuchtstärke auch ein kleinstmöglicher PWM-Strompuls eingestellt, d.h. eine möglichst hohe Frequenz gewählt, kann das Auftreten des BEFs unabhängig von der mittleren Leuchtstärke minimiert werden.

Vorteilhafterweise wird ein Abwärtsdimmen (Verdunkeln) der mittleren Leuchtstärke der OLED durch eine Verschmälerung der PWM-Strompulse oder durch Amplitudenmodulation erzielt, falls durch eine Verbreiterung der PWM-Lücken die Leuchtstärke der OLED in den PWM-Lücken unter den ersten Schwellenwert sinkt.

Durch Umschalten auf Amplitudenmodulation kann das Auftreten des BEFs verhindert werden, da die PWM-Lücken nicht weiter verbreitert werden müssen.

Eine Implementierung, die einem besseren Verständnis der vorliegenden Erfindung dient, betrifft ein Betriebsverfahren wenigstens einer OLED mittels PWM, wobei die fallenden Flanken am Ende der PWM-Strompulse der OLED schaltungstechnisch, insbesondere durch Kurzschließen verkürzt werden.

In dieser Implementierung, die dem besseren Verständnis der vorliegenden Erfindung dient, kann durch das Kurzschließen ein Nachleuchten der OLEDs nach Ende der PWM-Strompulse vermieden werden. Ein Nachteil des Nachleuchtens, das heißt der abfallenden Amplitude des Stroms, kann bei OLEDs eine Veränderung der Farbcharakteristik sein, da dies schon bei anorganischen LEDs nachgewiesen wurde. Durch das Kurzschließen wird also die Farbgenauigkeit der OLEDs verbessert.

Gemäß der Implementierung wird vorteilhafterweise die OLED direkt am Ende der PWM Strompulse kurzgeschlossen.

Dadurch kann ohne das Messen oder Erfassen des Verlaufs der Flanken und ohne eine Regelungsschaltung oder ähnliche Schaltung das Nachleuchten verhindert werden.

Gemäß der Implementierung werden vorteilhafterweise die fallenden Flanken am Ende der PWM-Strompulse der OLED direkt oder indirekt erfasst und die OLED wird kurzgeschlossen, falls die Flanken zu einer vorbestimmten Zeit nach Ende der PWM-Strompulse nicht unter einen zweiten Schwellenwert abfallen.

Die OLED wird nur kurzgeschlossen, falls durch ein Erfassen der Flanken bestimmt wird, dass die Flanken nicht schnell genug abfallen, um ein Nachleuchten substantiell zu vermeiden. Falls sie schnell genug abfallen, findet kein Kurzschließen statt, wodurch weniger Strom verbraucht wird.

Gemäß der Implementierung werden vorteilhafterweise die fallenden Flanken direkt mittels eines Lichtsensors gemessen, oder werden indirekt anhand einer Messung der an der OLED abfallenden Spannung, oder anhand einer Messung von charakteristischen Parametern der OLED und einem Vergleich mit entsprechenden vorher gespeicherten Referenzparametern bestimmt.

Eine weitere Implementierung, die einem besseren Verständnis der vorliegenden Erfindung dient, betrifft ein Betriebsverfahren wenigstens einer OLED mittels PWM, wobei der Betriebsstrom der OLED bezüglich seines Sollwerts beim Einschalten erhöht wird. Aufgrund der hohen Kapazität der OLED wird der Strom beim Einschalten nicht unmittelbar auf den Sollbetriebswert ansteigen, was Einfluss auf die Farb- bzw. Helligkeitscharakteristik der OLED haben kann. Deshalb wird ein Strom oberhalb des Sollwerts für einen zeitlich begrenzten Bereich zugelassen, um die Kapazität der OLED schnell zu laden. Dadurch werden die oben genannten Nachteile vermieden.

Vorteilhafterweise wird beim Einschalten die steigende Flanke der OLED erfasst und basierend auf der Erfassung der Erhöhung des Betriebsstroms eingestellt.

So kann gewährleistet werden, dass der Betriebsstrom nur erhöht wird falls notwendig und nur in einem notwendigen Ausmaß erhöht wird, das ausreicht, um die oben genannten Nachteile zu vermeiden. Dabei wird aber auch der zusätzliche Stromverbrauch, der durch die Erhöhung des Betriebsstroms entsteht, minimiert.

Gemäß der Implementierung wird vorteilhafterweise die steigende Flanke direkt mittels eines Lichtsensors gemessen, oder wird indirekt anhand einer Messung der an der OLED abfallenden Spannung, oder anhand einer Messung von Parametern der OLED und einem Vergleich mit entsprechenden vorher gespeicherten Referenzparametern bestimmt.

Die vorliegende Erfindung betrifft weiterhin eine Steuereinheit, insbesondere pc, ASIC oder Hybridversionen davon, die zur Durchführung eines Verfahrens der oben genannten vorteilhaften Ausführungen ausgebildet ist.

Die vorliegende Erfindung betrifft weiterhin eine Betriebsschaltung für eine oder mehrere OLEDs, die zur Ausführung eines Verfahrens wie oben vorteilhaft beschrieben, ausgebildet ist.

Die vorliegende Erfindung betrifft weiterhin eine Betriebsschaltung zur PWM-Ansteuerung wenigstens einer OLED, die aufweist: eine Treibereinheit, um die OLED mit Strom zu versorgen, eine Steuereinheit, um die OLED zu steuern, eine Messeinheit, um eine oder mehrere steigende oder fallende Flanken am Beginn oder Ende eines PWM-Strompulses der OLED direkt oder indirekt zu erfassen, wobei die Steuereinheit dazu geeignet ist, die Stromversorgung der OLED abhängig von dem erfassten Verlauf der Flanken einzustellen.

Eine solche Betriebsschaltung kann wie oben beschrieben vorteilhafterweise dazu verwendet werden, den BEF zu unterdrücken.

Vorteilhafterweise ist die Messeinheit ein Lichtsensor, der die Flanken direkt erfasst, oder ist ein Spannungsmessgerät, das die Flanken indirekt anhand der abfallenden Spannung der OLED bestimmt.

Vorteilhafterweise umfasst die Betriebsschaltung ferner einen Speicher, um Referenzeigenschaften der OLED zu speichern, wobei die Steuereinheit dazu geeignet ist, die Messung der Messeinheit mit den Referenzeigenschaften zu vergleichen, um die Flanken indirekt zu bestimmen.

Eine Implementierung, die einem besseren Verständnis der vorliegenden Erfindung dient, betrifft eine Betriebsschaltung zur PWM-Ansteuerung wenigstens einer OLED, die aufweist: eine Treibereinheit, um die OLED mit Strom zu versorgen, eine Steuereinheit, um die OLED zu steuern und eine Steuereinheit, die dazu geeignet ist, die fallenden Flanken am Ende der PWM-Strompulse der OLED schaltungstechnisch, insbesondere durch Kurzschließen, zu verkürzen.

Die Betriebsschaltung kann vorteilhafterweise dazu verwendet werden, wie oben beschrieben das nachteilige Nachleuchten der OLEDs zu unterdrücken.

Eine weitere Implementierung, die einem besseren Verständnis der vorliegenden Erfindung dient, betrifft ferner eine Betriebsschaltung zu PWM-Ansteuerung wenigstens einer OLED, die aufweist: eine Treibereinheit um die OLED mit Strom zu versorgen, eine Steuereinheit, um die OLED zu steuern, wobei die Steuereinheit dazu geeignet ist die Treibereinheit zu steuern um den Betriebsstrom der OLED bezüglich seines Sollwerts beim Einschalten zu erhöhen.

Die Betriebsschaltung kann vorteilhafterweise dazu verwendet werden, wie oben beschrieben ein schnelles Laden der Kapazität der OLED beim Einschalten zu gewährleisten.

Die vorliegende Erfindung wird im Folgenden anhand der beigefügten Figuren im Detail erläutert.
Fig. 1a bis 1c zeigen die PWM-Strompulse und PWM-Lücken für drei verschiedene mittlere Helligkeiten der OLED.
Fig. 2 zeigt das Verhalten der Leuchtstärke einer anorganischen LED in zeitlicher Abhängigkeit von dem PWM-Signal.
Fig. 3 zeigt die Auswirkungen des sogenannten Perlschnureffekts ("Bead Effect").
Fig. 4 zeigt den Verlauf der Leuchtstärke einer OLED in zeitlicher Abhängigkeit von dem PWM-Signal.
Fig. 5 zeigt eine erfindungsgemäße Betriebsschaltung für eine OLED.
Fig. 6 zeigt mögliche diskrete Messpunkte für die Erfassung des Verlaufs steigender oder fallender Flanken der OLED.
Fig. 7 zeigt ein Beispiel eines Betriebsverfahrens einer OLED mittels PWM zur Vermeidung des BEF.
Fig. 8a zeigt ein Ersatzschaltbild einer OLED, Fig. 8b zeigt ein Ersatzschaltbild einer OLED, bei dem der Verlauf der Flanken eingestellt werden kann.
Fig. 9 zeigt eine verkürzte Flanke einer OLED durch Anwenden eines erfindungsgemäßen Betriebsverfahrens.
Fig. 10 zeigt eine beschleunigte Einschaltflanke einer OLED durch Anwenden eines erfindungsgemäßen Betriebsverfahrens.

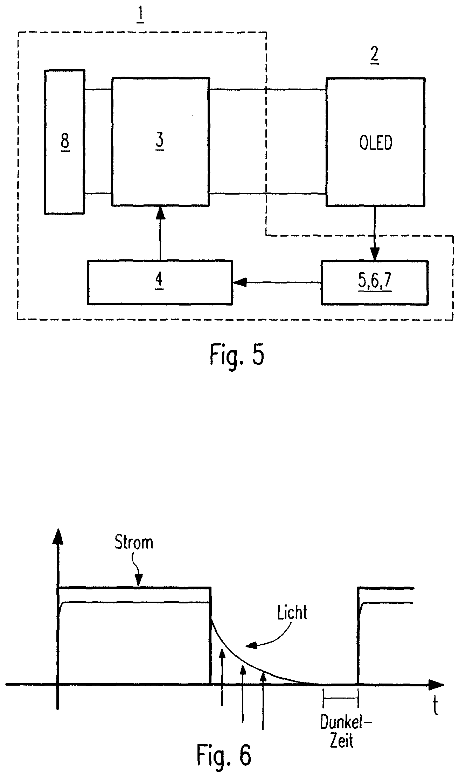

Fig. 5 zeigt eine erfindungsgemäße Betriebsschaltung 1, die die erfindungsgemäßen Betriebsverfahren ausführen kann. Die Betriebsschaltung 1 ist dabei mit einer OLED 2 verbunden. Dabei umfasst die Betriebsschaltung 1 eine Treibereinheit 3, um die OLED mit Strom zu versorgen. Die Versorgung der OLED 2 erfolgt dabei mittels Pulsweitemodulation (PWM). Die Treibereinheit 3 wird von einer Steuereinheit 4 gesteuert. Die Steuereinheit 4 steuert die Treibereinheit 3 dermaßen, dass die PWM-Strompulse, insbesondere deren Amplitude und Pulsbreite t_{P} sowie die PWM-Lücken, insbesondere deren Breite t_{L}, eingestellt werden. Des Weiteren kann die Steuereinheit 4 gemäß einer weiteren Implementierung, die einem besseren Verständnis der vorliegenden Erfindung dient, zum Beispiel dazu geeignet sein, die fallenden Flanken am Ende der PWM-Strompulse der OLED 2, wie in Fig. 4 dargestellt, schaltungstechnisch, zum Beispiel durch Kurzschließen zu verkürzen. Dies verhindert ein Nachleuchten der OLED 2 in den PWM-Lücken. Dazu wird beispielsweise ein niedrigohmiger Überbrückungsleiter parallel zu der OLED 2 angeschlossen, um deren Kapazität instantan zu entladen. Dadurch folgt das von der OLED 2 ausgestrahlte Licht wie bei einer LED (in Fig. 2 dargestellt) dem PWM-Signal.

Die Betriebsschaltung 1 kann mit einer zusätzlichen Messeinheit 5, 6, 7 ausgestattet sein. Die Messeinheit 5, 6, 7 misst dabei den Spannungsverlauf U (über den OLEDs) im Bereich einer oder mehrerer steigender oder fallende Flanken am Beginn oder am Ende eines PWM-Strompulses. Die Messeinheit 5, 6, 7 übermittelt daraufhin den erfassten Verlauf der Flanken an die Steuereinheit 4. Die Steuereinheit 4 wiederum wertet den erfassten Verlauf der Flanken aus und steuert die Treibereinheit 3 abhängig von dem erfassten Verlauf der Flanken.

Die Messeinheit 5, 6, 7 kann dabei entweder ein Lichtsensor 5 sein, der das nachleuchtende Licht der OLED 2 direkt misst. Die Messeinheit 5, 6, 7 kann aber auch ein Spannungsmessgerät 6 sein, das direkt oder indirekt die an der OLED 2 abfallende Spannung U misst, wobei die Steuereinheit 4 anhand dieser Messung den Verlauf der Flanken bestimmt. Es ist auch denkbar, dass die Messeinheit 5, 6, 7 eine Messeinheit 7 für andere charakteristische Eigenschaften der OLED 2, wie zum Beispiel der Temperatur, ist und deren Messungen mit entsprechenden vorher gespeicherten Referenzparametern zum Bestimmen des Verlaufs der Flanken verglichen wird. Dazu kann die Betriebsschaltung 1 einen Speicher 8 umfassen, der mit der Steuereinheit 4 verbunden ist, und in dem die Referenzparameter gespeichert werden können. Die Speichereinheit 8 kann alternativ auch in der Steuereinheit 4 oder der Messeinheit 5, 6, 7 enthalten sein. Die Speichereinheit 8 ist ein nichtflüchtiger Speicher, wie zum Beispiel eine Festplatte, ein Halbleiterspeicher oder ein magnetischer Speicher.

Die Messeinheit 5, 6, 7 kann dazu ausgelegt sein, den Verlauf der Spannung U über den OLEDs kontinuierlich zu erfassen, was die größtmögliche Genauigkeit erzielt. Dabei ist es vorteilhaft, die Messeinheit kurz vor Ende oder am Ende der PWM-Strompulse in Betrieb zu nehmen und mindestens über die komplette Dauer der PWM-Lücken zu betreiben. Die Messeinheit 5, 6, 7 wird dabei von der Steuereinheit 4 gesteuert. Je nach erfasstem Verlauf der Spannung U im Bereich der Flanken kann die Betriebszeit der Messeinheit 5, 6, 7 aber auch optimiert werden, falls zum Beispiel von der Steuereinheit 4 festgestellt wird, dass der Verlauf jeder Flanke schon vor dem Ende der PWM-Lücke und dem nächsten PWM-Strompuls beendet ist.

Der Verlauf der Spannung U hängt direkt von der Kapazität der OLED 2 ab. Typische Werte liegen zwischen 200 und 400 pF/mm². Die genaue Kapazität der OLED 2 kann auch im Vorfeld gemessen werden und der erhaltene Wert kann in dem Speicher 8 abgelegt werden. Die Steuereinheit 4 kann dann die Messeinheit 5, 6, 7 dermaßen steuern, dass nur über die antizipierte Dauer der Flanken die Messeinheit betrieben wird. Es ist außerdem denkbar, dass der Wert in der Speichereinheit 8 gespeichert wird und in größeren Intervallen, das heißt größer als die Frequenz des PWM-Signals, aktualisiert wird. So kann Strom gespart werden. Es ist auch möglich nur einmalig zu Beginn der PWM-Lücke den Verlauf der Flanke zu messen und den Verlauf in der Speichereinheit 8 abzuspeichern und die OLED 2 entsprechend zu betreiben.

Statt den Verlauf der Spannung U kontinuierlich zu messen, kann die Messeinheit 5, 6, 7 auch, wie in Fig. 6 dargestellt, eine oder mehrere diskrete Messungen durchführen. Mögliche Zeitpunkte während der PWM-Lücke sind zum Beispiel genau definierte Verzögerungen nach dem Abschalten des PWM-Strompulses. In Fig. 6 sind drei diskrete Messungen in der PWM-Lücke, wie anhand der Pfeile dargestellt, vorgesehen. Da bekannt ist, dass sich Kapazitäten in der Regel exponentiell entladen, kann es ausreichen, nur zwei Punkte, zum Beispiel einen Startpunkt und einen Zwischenpunkt des Verlaufs der Flanken mit der Messeinheit 5, 6, 7 zu messen und anschließend die Steuereinheit 4 den genauen Verlauf berechnen zu lassen. Mittels diskreter Messungen muss die Messeinheit 5, 6, 7 nicht über den gesamten Verlauf der Flanke der OLED 2 mit Strom versorgt werden, sondern muss nur zu den Zeitpunkten der diskreten Messungen aktiviert werden. Dadurch kann Strom gespart werden.

Die Steuereinheit 4 kann die Treibereinheit 3 dermaßen steuern, dass zukünftige PWM-Strompulse auf Basis der erkannten Verläufe der Flanken eingestellt werden. Falls zum Beispiel eine Flanke bis zum Ende der PWM-Lücke nicht auf 0 abgesunken ist, aber eine Vermeidung des BEF gewünscht ist, kann die Steuereinheit 4 bestimmen dass für die zukünftigen PWM-Strompulse deren Breite tp vergrößert und dadurch die Breite der PWM Lücken t_{L} verkleinert wird. Bei gleichbleibender mittlerer Leuchtstärke der OLED 2 können auch beide, die Breite tp der Strompulse und die Breite t_{L} der PWM-Lücken verkleinert werden. Sinkt nun die Leuchtstärke der OLED 2 während der PWM-Lücken nicht mehr bis auf 0 ab, so kann der BEF unterdrückt beziehungsweise vermieden werden. Die Steuereinheit 4 kann beispielsweise die Treibereinheit 3 so steuern, dass die OLED 2 dermaßen betrieben wird, dass für eine gewünschte mittlere Leuchtstärke der OLED 2 stets eine kleinstmögliche PWM-Lücke eingestellt wird. Ein Aufwärtsdimmen und ein Abwärtsdimmen der OLED 2 werden dann, soweit möglich, durch eine Veränderung der Breite tp der PWM-Strompulse erzielt, oder gegebenenfalls auch durch eine Amplitudenmodulation erzielt. Bei der Amplitudenmodulation wird die mittlere Leuchtstärke der OLED 2 nicht mehr durch ein Verändern des Verhältnisses der Breiten der PWM-Strompulse zu den PWM-Lücken eingestellt, sondern direkt durch ein Erhöhen oder Erniedrigen der Stromamplitude eingestellt.

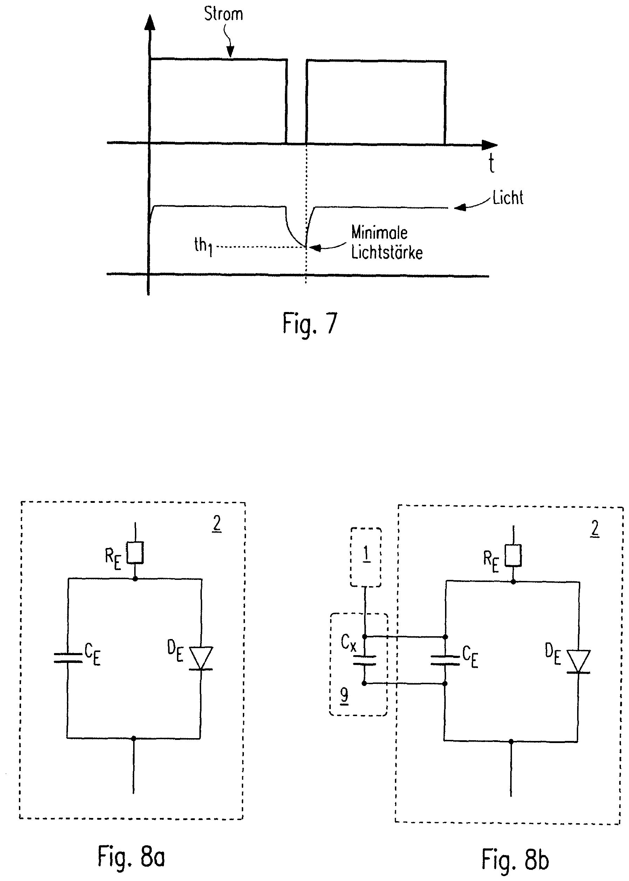

Mittels der Steuereinheit 4 und der Treibereinheit 3 kann die OLED 2 auch so betrieben werden, dass ihre Leuchtstärke während der PWM-Lücken stets über einem vorbestimmten ersten Schwellenwert th₁ liegt. Ein Beispiel dafür ist in Fig. 7 gezeigt. Am Ende der PWM-Strompulse sinkt das Licht der OLED 2 entsprechend ihrer Kapazität ab. Nun kann aber die Breite der PWM-Lücke so schmal eingestellt werden, dass das Licht nie unter eine minimale Leuchtstärke th₁ fällt. Dies ist im unteren Teil der Figur gezeigt. Eine Möglichkeit dies zu erreichen besteht darin, anhand des erfassten Verlaufs der Flanken die mögliche Breite t_{L} der PWM-Lücken zu begrenzen. Eine andere Möglichkeit besteht darin, falls doch breitere PWM-Lücken benötigt werden, die Amplitude der Strompulse zu erhöhen, so dass die Leuchtstärke der OLED 2 eine längere Zeit benötigt um unter den ersten Schwellenwert th₁ zu sinken. Der Schwellenwert th₁ kann so gewählt werden, dass ein Auftreten des BEF verringert oder komplett vermieden wird. Der Grenzwert für die Breite t_{L} der PWM-Lücken kann entweder im Vorfeld festgelegt und in dem Speicher 8 abgelegt werden, oder er kann laufend aktualisiert werden. Beispielsweise wird für einen erfassten Verlauf der Flanke die nächste PWM-Lücke entsprechend eingestellt und in dieser PWM-Lücke erneut ein Verlauf erfasst.

Die erfindungsgemäße Betriebsschaltung beziehungsweise das erfindungsgemäße Verfahren können auch verwendet werden, um den Verlauf der Flanken schaltungstechnisch zu beeinflussen. Dabei kann der Verlauf der Flanken entweder direkt eingestellt werden, oder schaltungstechnisch geregelt werden. In Fig. 8a ist ein Ersatzschaltbild einer OLED 2 dargestellt. Die OLED 2 wird von einem Ersatzwiderstand R_{E}, einer Ersatzkapazität C_{E} und einer Ersatzdiode D_{E} modelliert. Die Ersatzkapazität C_{E} und die Ersatzdiode D_{E} sind dabei parallel zueinander geschaltet, und beide sind in Serie mit dem Ersatzwiderstand R_{E} geschaltet. Die Ersatzkapazität C_{E} bestimmt den Verlauf der Flanken der OLED 2 am Ende der PWM-Strompulse.

Der Ersatzwiderstand R_{E} liegt in der Größenordnung von etwa 15 Ohm und ist durch die dünnen planaren Leiterbahnen der OLED 2 bedingt. Die Ersatzkapazität C_{E} ist wegen der planaren Ausdehnung der OLED 2 ebenfalls relativ hoch und erreicht Werte zwischen 200 und 400 pF/mm². Die Ersatzdiode D_{E} weist eine typische Diodenkennlinie auf und wird erst oberhalb von 2,5 bis 3 Volt leitend.

Um den Verlauf der Flanken zu verändern muss also die Ersatzkapazität C_{E} verändert werden. In Fig. 8b ist beispielhafterweise ein weiterer Kondensator Cx parallel zu der Ersatzkapazität C_{E} geschaltet, was die Gesamtkapazität der Schaltung erhöht. Dadurch würde der Verlauf der Flanken verlängert werden, das heißt weiter in die PWM-Lücken hineinreichen. Entsprechend wird durch eine der Ersatzkapazität C_{E} in Serie geschaltete Kapazität Cx die Gesamtkapazität verringern und das Nachleuchten, beziehungsweise den Verlauf der Flanken, verkürzen. Würde die Ersatzkapazität C_{E} am Ende der PWM-Strompulse kurzgeschlossen, so würden die Flanken dem PWM-Signal direkt folgen.

In Fig. 8b ist auch angedeutet, dass die Betriebsschaltung 1, die mit der OLED 2 verbunden ist und diese betreibt Einfluss auf die schaltungstechnischen Veränderungen der Ersatzkapazität C_{E} nehmen kann. Die Betriebsschaltung 1 kann kompliziertere Regelschaltungen 9, die der Ersatzkapazität C_{E} parallel oder seriell angeschlossen sind, so steuern, dass der Verlauf der Flanken beliebig einstellbar ist. Beispielsweise kann ein gewisser Sollwert des Verlaufs der Flanken vorgegeben sein und in dem Speicher 8 der Betriebsschaltung 1 gespeichert sein. Mittels der Messeinheit 5, 6, 7 wird der tatsächliche Ist-Verlauf der Flanken gemessen. Die Steuereinheit 4 kann dann den gemessenen Ist-Verlauf mit dem vorgegebenen Sollwert vergleichen und basierend auf dem Vergleich durch Steuerung des Regelschaltkreises 9, der aus mehreren passiven Elementen wie Kapazitäten und Widerständen bestehen kann, den Sollwert für den Verlauf der Flanken einstellen.

Eine weitere Implementierung, die einem besseren Verständnis des erfindungsgemäßen Verfahrens dient, sieht vor, dass die fallenden Flanken am Ende der PWM-Strompulse der OLED 2 schaltungstechnisch verkürzt werden. Insbesondere kann dabei ein Kurzschließen der Ersatzkapazität C_{E} erfolgen. Dadurch fällt die Leuchtstärke der OLED 2 instantan nach Ende des PWM-Strompulses ab. Ein Kurzschluss kann dabei von dem Regelkreis 9 erzielt werden, der von der Betriebsschaltung 1 gesteuert wird. Der Regelkreis 9 kann natürlich auch in der Betriebsschaltung 1 enthalten sein. Der Regelkreis 9 kann allerdings auch in der OLED 2 enthalten sein, das heißt mittels Halbleitertechnologie auf den OLED-Chip prozessiert sein. Wird die OLED 2 jeweils direkt am Ende der PWM-Strompulse kurzgeschlossen, so ist keine Messung des Verlaufs der Flanken, weder direkt noch indirekt, nötig. Die Steuereinheit 4, die die Treiberschaltung 3 steuert, gibt dabei jedes Mal wenn sie ein Signal zum Ende des PWM-Strompulses an die Treibereinheit 3 übermittelt auch ein Signal an den Regelkreis 9 weiter, der das Kurzschließen der Ersatzkapazität C_{E} beziehungsweise der OLED 2 veranlasst.

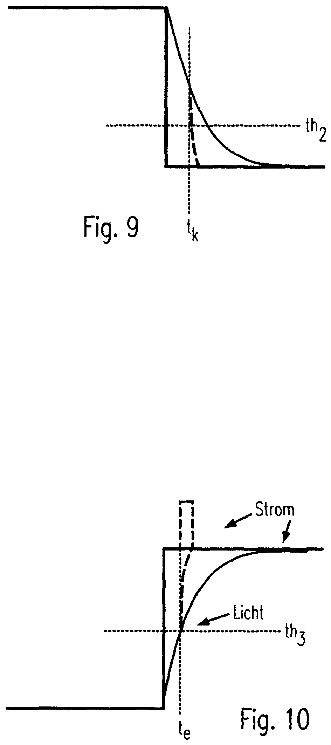

Das Kurzschließen der OLED 2 kann vorteilhafterweise auch abhängig vom Verlauf der Flanken durchgeführt werden. In Fig. 9 ist zum Beispiel dargestellt, dass ein Kurzschluss der OLED 2 nur erfolgt, falls das von der OLED 2 emittierte Licht innerhalb einer vorgegebenen Zeit nach Ende des PWM-Strompulses unter einen bestimmten zweiten Schwellenwert th₂ abfällt. In Fig. 9 ist als durchgezogene Linie das Licht der OLED 2 nach Ende des PWM-Strompulses gezeigt. Dieser fällt entsprechend der Kapazität der OLED 2 exponentiell ab. Zu einem vorbestimmten Zeitpunkt tₖ wird nun von der Steuereinheit 4 bestimmt, ob die Leuchtstärke der OLED 2 unter den Schwellenwert th₂ gefallen ist. Die Erfassung der Leuchtstärke durch die Messeinheit 5, 6, 7 kann dabei entweder nur zum Zeitpunkt t_{K} erfolgen, oder kontinuierlich, oder in mehreren diskreten Zeitpunkten erfasst werden, wie oben beschrieben. Wird festgestellt, dass die Leuchtstärke zum Zeitpunkt t_{K} schon unter den Schwellenwert th₂ gefallen ist, übermittelt die Steuereinheit 4 kein Signal, das ein Kurzschließen der OLED 2 veranlasst. Wird festgestellt dass die Leuchtstärke zum Zeitpunkt t_{K} noch nicht unter einen Stellenwert th₂ gefallen ist, so übermittelt die Steuereinheit 4 ein Signal an den Regelkreis 9 zum Kurzschließen der OLED 2. Die resultierende Leuchtstärke ist als gestrichelte Linie in Fig. 9 dargestellt und fällt zum vorgegebenen Zeitpunkt t_{K} instantan auf 0 ab.

Das Verfahren eignet sich gut um ein Nachleuchten der OLED 2 in den PWM-Lücken zu verhindern, was unter Umständen die Farbcharakteristik der OLED verändern kann. Eine solche Veränderung der Farbcharakteristik, das heißt zum Beispiel der Farbe an sich, der Farbtemperatur bei weißen OLEDs oder der Sättigung der Farbe, ist zum Beispiel bei herkömmlichen LEDs nachgewiesen. Das eben beschriebene erfindungsgemäße Verfahren nutzt vorteilhafterweise wiederum den von den Erfindern erkannten Effekt aus, das ein Nachleuchten der OLED 2, die mit PWM betrieben wird, aufgrund ihrer parasitären Kapazität stärker ausfällt als bei herkömmlichen LEDs. Im Gegensatz zum ersten beschriebenen Verfahren, bei dem dieser Effekt gezielt vorteilhaft ausgenutzt wird um den BEF zu vermeiden, wird nun dem Effekt gezielt entgegengesteuert um eine Veränderung der Farbcharakteristik der OLED 2 zu verhindern. Die unterschiedlichen Vorteile können ausgenutzt werden, je nachdem wie die OLED 2 eingesetzt werden soll. Da der BEF nur in Kombination mit Bewegung eintritt, kann bei einer stationären OLED 2 das zweite Verfahren vorteilhaft sein.

Eine weitere vorteilhafte Ausnutzung der Entdeckung betrifft ein Betriebsverfahren, das den Betriebsstrom der OLED 2 beim Einschalten steuert. Wie in Fig. 10 gezeigt (durchgezogene Linie) wird beim Einschalten der OLED 2 aufgrund der parasitären Kapazitäten die Leuchtstärke nicht direkt auf einen Sollwert ansteigen, sondern vielmehr auch durch eine Flanke den Sollwert erreichen. Dies kann sehr unvorteilhaft in Bezug auf die Farbcharakteristik oder die mittlere Helligkeit der OLED 2 sein. Diesem Effekt steuert das Verfahren entgegen, indem beim Einschalten der OLED 2 über einen zeitlich begrenzten Bereich, der kürzer ist als die gesamte Einschaltdauer eines PWM-Strompulses ein Betriebsstrom oberhalb seines sonst gültigen Sollwerts zugelassen wird. Dazu steuert die Steuereinheit 4 eine Treibereinheit 3 einer Betriebsschaltung 1 dermaßen, dass die damit betriebene OLED 2 zu Beginn mit einem höheren Betriebsstrom versorgt wird. Da eine ideale Stromquelle unverzüglich den Sollstromwert erreicht, kann die Kapazität der OLED 2 schneller geladen werden. Die Leuchtstärke der OLED 2 erreicht dadurch schneller ihren Sollwert, da die steigende Einschaltflanke viel steiler wird.

In einer Implementierung, die einem besseren Verständnis der vorliegenden Erfindung dient, ist es möglich, direkt beim Einschalten der OLED 2 den Betriebsstrom über seinen Sollwert zu erhöhen, und dabei einen festgelegten überhöhten Stromwert zu verwenden. Diese Information über diesen Stromwert kann in dem Speicher 8 gespeichert werden und wird jedes Mal beim Einschalten der Steuereinheit 4 ausgelesen und der Treibereinheit 3 übermittelt. Es kann aber auch möglich sein, die steigende Flanke, wie oben beschrieben direkt oder indirekt mit der Messeinheit 5, 6, 7 zu erfassen und die Überhöhung des Betriebsstroms darauf basierend zu steuern. Wird eine steile Flanke erfasst, so ist nur eine geringfügige Erhöhung des Betriebsstroms notwendig um die Leuchtstärke in einer adäquaten Zeit auf ihrem Sollwert zu erhöhen. Wird bei der Erfassung der steigenden Flanke festgestellt, dass zum Beispiel nach einer vorgegebenen Zeit tₑ die Leuchtstärke nicht über einen Schwellenwert th₃ angestiegen ist, so kann der Betriebsstrom erhöht werden, wie in Fig. 10 durch die gestrichelte Leuchtstärke veranschaulicht wird. Der eingestellte erhöhte Betriebsstrom kann auch kontinuierlich entsprechend des erfassten Verlaufs der steigenden Flanke geregelt werden, um zu gewährleisten, dass nach einer vorgegebenen Zeit der Sollwert der Leuchtstärke erreicht ist.

Insbesondere kann der Strom zu Beginn einer jeden Einschaltflanke jedes PWM-Impulses höher gewählt werden ("Boost") als im weiteren Verlauf der Flanke und/oder im stationären Bereich des PWM-Impulses. Somit werden die Kapazitäten beschleunigt geladen.

Der Verlauf der Spannung U über den OLEDs im Bereich der Flanken wird also vorzugsweise nicht nur direkt oder indirekt, diskret mit wenigstens einem Messpunkt oder kontinuierlich, gemessen, sondern auch als zurückgeführter Istwert einer Flankenregelung verwendet, um den Flankenverlauf auf eine Sollkurve zu regeln.

Es kann ein Sollverlauf der Spannung U vorgeben werden, den die Stromversorgung durch Regelung versucht, nachzufahren. Dieser Sollverlauf kann bspw. ein konstanter ansteigender Spannungsgradient (dU/dt) der Flanke sein, vorzugsweise unabhängig von der konkret angesteuerten OLED und somit von der vorliegenden Kapazität. Der Regelung überlaqert werden kann natürlich ein vorgegebener Maximalwert für den Strom.

Zusammenfassend nutzt die vorliegende Erfindung den Effekt aus, dass die hohen parasitären Kapazitäten einer OLED im PWM-Betrieb ein verlängertes Abfallen der Leuchtstärke nach jedem PWM-Strompuls zur Folge haben. Dies kann entweder vorteilhafterweise durch ein Verfahren ausgenutzt werden, das verhindert dass die Leuchtstärke in den PWM-Lücken auf 0, beziehungsweise unter einen Schwellenwert minimaler Leuchtstärke, fällt. Der oben beschriebene BEF, der bei einer Kombination von Dunkelzeit und Bewegung (relativ zu) der OLED 2 auftritt, kann dadurch kontrolliert, unterdrückt oder komplett vermieden werden.

In einem zweiten Verfahren wird ohne Rücksicht auf den BEF dem Nachleuchten der OLED 2 entgegengewirkt, um eine bessere Farbcharakteristik zu erzielen. Dafür können die fallenden Flanken verkürzt oder kontrolliert eingestellt werden. In einem dritten Verfahren wird dem besagten Effekt beim Einschalten der OLED Rechnung getragen, indem die steigenden Flanken zu Beginn durch eine Überhöhung des Betriebsstroms verkürzt werden, um ein schnelleres Erreichen des Sollwerts der Leuchtstärke zu erzielen.

Für alle Verfahren ist es vorteilhaft den Verlauf der Flanken direkt oder indirekt zu erfassen und diese entweder direkt zu steuern, oder die PWM-Strompulse beziehungsweise PWM-Lücken entsprechend dem Verlauf zu steuern. Die Verfahren können durch die beschriebene Betriebsschaltung ausgeführt werden, oder können direkt von einer Steuereinheit, die insbesondere eine pc, ASIC oder Hybridversion davon sein kann, ausgeführt werden.
erreicht dadurch schneller ihren Sollwert, da die steigende Einschaltflanke viel steiler wird.

Es ist möglich direkt beim Einschalten der OLED 2 den Betriebsstrom über seinen Sollwert zu erhöhen, und dabei einen festgelegten überhöhten Stromwert zu verwenden. Diese Information über diesen Stromwert kann in dem Speicher 8 gespeichert werden und wird jedes Mal beim Einschalten der Steuereinheit 4 ausgelesen und der Treibereinheit 3 übermittelt. Es kann aber auch möglich sein, die steigende Flanke, wie oben beschrieben direkt oder indirekt mit der Messeinheit 5, 6, 7 zu erfassen und die Überhöhung des Betriebsstroms darauf basierend zu steuern. Wird eine steile Flanke erfasst, so ist nur eine geringfügige Erhöhung des Betriebsstroms notwendig um die Leuchtstärke in einer adäquaten Zeit auf ihrem Sollwert zu erhöhen. Wird bei der Erfassung der steigenden Flanke festgestellt, dass zum Beispiel nach einer vorgegebenen Zeit tₑ die Leuchtstärke nicht über einen Schwellenwert th₃ angestiegen ist, so kann der Betriebsstrom erhöht werden, wie in Fig. 10 durch die gestrichelte Leuchtstärke veranschaulicht wird. Der eingestellte erhöhte Betriebsstrom kann auch kontinuierlich entsprechend des erfassten Verlaufs der steigenden Flanke geregelt werden, um zu gewährleisten, dass nach einer vorgegebenen Zeit der Sollwert der Leuchtstärke erreicht ist.

Insbesondere kann der Strom zu Beginn einer jeden Einschaltflanke jedes PWM-Impulses höher gewählt werden ("Boost") als im weiteren Verlauf der Flanke und/oder im stationären Bereich des PWM-Impulses. Somit werden die Kapazitäten beschleunigt geladen.

Der Verlauf der Spannung U über den OLEDs im Bereich der Flanken wird also vorzugsweise nicht nur direkt oder indirekt, diskret mit wenigstens einem Messpunkt oder kontinuierlich, gemessen, sondern auch als zurückgeführter Istwert einer Flankenregelung verwendet, um den Flankenverlauf auf eine Sollkurve zu regeln.

Es kann ein Sollverlauf der Spannung U vorgeben werden, den die Stromversorgung durch Regelung versucht, nachzufahren. Dieser Sollverlauf kann bspw. ein konstanter ansteigender Spannungsgradient (dU/dt) der Flanke sein, vorzugsweise unabhängig von der konkret angesteuerten OLED und somit von der vorliegenden Kapazität. Der Regelung überlaqert werden kann natürlich ein vorgegebener Maximalwert für den Strom.

Zusammenfassend nutzt die vorliegende Erfindung den Effekt aus, dass die hohen parasitären Kapazitäten einer OLED im PWM-Betrieb ein verlängertes Abfallen der Leuchtstärke nach jedem PWM-Strompuls zur Folge haben. Dies kann entweder vorteilhafterweise durch ein Verfahren ausgenutzt werden, das verhindert dass die Leuchtstärke in den PWM-Lücken auf 0, beziehungsweise unter einen Schwellenwert minimaler Leuchtstärke, fällt. Der oben beschriebene BEF, der bei einer Kombination von Dunkelzeit und Bewegung (relativ zu) der OLED 2 auftritt, kann dadurch kontrolliert, unterdrückt oder komplett vermieden werden.

In einem zweiten Verfahren wird ohne Rücksicht auf den BEF dem Nachleuchten der OLED 2 entgegengewirkt, um eine bessere Farbcharakteristik zu erzielen. Dafür können die fallenden Flanken verkürzt oder kontrolliert eingestellt werden. In einem dritten Verfahren wird dem besagten Effekt beim Einschalten der OLED Rechnung getragen, indem die steigenden Flanken zu Beginn durch eine Überhöhung des Betriebsstroms verkürzt werden, um ein schnelleres Erreichen des Sollwerts der Leuchtstärke zu erzielen.

Für alle Verfahren ist es vorteilhaft den Verlauf der Flanken direkt oder indirekt zu erfassen und diese entweder direkt zu steuern, oder die PWM-Strompulse beziehungsweise PWM-Lücken entsprechend dem Verlauf zu steuern. Die Verfahren können durch die beschriebene Betriebsschaltung ausgeführt werden, oder können direkt von einer Steuereinheit, die insbesondere eine µc, ASIC oder Hybridversion davon sein kann, ausgeführt werden.

## Patentansprüche

1. Verfahren zum Betrieb wenigstens einer organischen Leuchtdiode, OLED (2), wobei
- die OLED (2) mit PWM-Strompulsen versorgt wird,
- der Verlauf einer oder mehrerer steigenden oder fallenden Flanken der Helligkeit der OLED (2) am Beginn oder Ende eines PWM-Strompulses der OLED (2) direkt oder indirekt erfasst wird; und
- die Stromamplitude der PWM-Strompulse abhängig von dem erfassten Verlauf der Flanke(n) eingestellt wird.

2. Betriebsverfahren gemäß Anspruch 1, wobei der Verlauf der Flanke(n) kontinuierlich erfasst wird, oder durch eine oder mehrere diskrete Messungen, beispielweise zum Zeitpunkt einer definierten Verzögerung nach dem Abschalten des PWM-Strompulses, erfasst wird.

3. Betriebsverfahren gemäß einem der Ansprüche 1 bis 2, wobei zukünftige PWMStrompulse eingestellt werden.

4. Betriebsverfahren gemäß einem der Ansprüche 1 bis 3, wobei der Verlauf der Flanke(n) schaltungstechnisch direkt eingestellt wird, oder wobei der Verlauf der Flanke(n) schaltungstechnisch geregelt wird, indem ein vorgegebener Sollwert des Verlaufs mit einem Ist-Verlauf verglichen wird.

5. Betriebsverfahren gemäß einem der Ansprüche 1 bis 4, wobei der Verlauf der Flanke(n) direkt mittels eines Lichtsensors (5) oder indirekt anhand elektrischer Messgrössen gemessen werden.

6. Betriebsverfahren gemäß einem der Ansprüche 1 bis 5, wobei der Verlauf der Flanke(n) indirekt anhand einer Messung der an der OLED (2) abfallenden Spannung, oder anhand einer Messung von charakteristischen Parametern der OLED (2) und einem Vergleich mit entsprechenden vorher gespeicherten ReferenzParametern bestimmt werden.

7. Betriebsverfahren gemäß einem der Ansprüche 1 bis 6, wobei die OLED (2) so betrieben wird, dass ihre Leuchtstärke während der PWM-Lücken stets über einem vorbestimmten ersten Schwellenwert liegt, indem beispielweise die Breite der PWM Lücken begrenzt wird.

8. Betriebsverfahren gemäß einem der Ansprüche 1 bis 7, wobei die OLED (2) so betrieben wird, dass für eine gewünschte mittlerer Leuchtstärke stets die kleinstmögliche PWM-Lücke eingestellt wird.

9. Betriebsverfahren gemäß einem der Ansprüche 7 bis 8, wobei ein Abwärtsdimmen der mittleren Leuchtstärke der OLED (2) durch eine Verschmälerung der PWMStrompulse oder durch Amplitudenmodulation erzielt wird, falls durch eine Verbreiterung der PWM-Lücken die Leuchtstärke der OLED (2) in den PWM-Lücken unter den ersten Schwellenwert sinkt.

10. Betriebsschaltung (1) zur PWM-Ansteuerung wenigstens einer organischen Leuchtdiode OLED (2), die aufweist:
- eine Treibereinheit (3), um die OLED (2) mit PWM-Strompulsen zu versorgen;
- eine Steuereinheit (4), um die OLED (2) zu steuern;
- eine Messeinheit (5, 6, 7), um den Verlauf einer oder mehrerer steigenden oder fallenden Flanken der Helligkeit der OLED (2) am Beginn oder Ende eines PWMStrompulses der OLED (2) direkt oder indirekt zu erfassen;
- wobei die Steuereinheit (4) dazu geeignet ist, die Stromamplitude der PWMStrompulse abhängig von dem erfassten Verlauf der Flanke(n) einzustellen.

11. Betriebsschaltung (1) gemäß Anspruch 10, wobei die Messeinheit ein Lichtsensor (5) ist, der den Verlauf der Flanke(n) direkt misst, oder ein Spannungsmessgerät (6) ist, das den Verlauf der Flanke(n) indirekt anhand der an der OLED (2) abfallenden Spannung bestimmt.

12. Betriebsschaltung (1) gemäß Anspruch 10,
die ferner einen Speicher (8) umfasst, um Referenz-Eigenschaften der OLED (2) zu speichern, und
wobei die Steuereinheit (4) dazu geeignet ist, die Messung der Messeinheit (5, 6, 7) mit den Referenz-Eigenschaften zu vergleichen, um den Verlauf der Flanke(n) indirekt zu bestimmen.

## Claims

1. Method for operating at least one organic light-emitting diode, OLED (2), wherein
- the OLED (2) is supplied with PWM pulses,
- the course of one or more rising or falling edges of the brightness of the OLED (2) at the beginning or end of a PWM pulse of the OLED (2) is detected directly or indirectly; and
- the current amplitude of the PWM pulses is set as a function of the detected course of the edge(s).

2. Operating method according to claim 1, wherein the course of the edge(s) is continuously detected, or detected by one or more discrete measurements, for example at the instant of a defined delay after the switching off of the PWM pulse.

3. Operating method according to one of the claims 1 to 2, wherein future PWM pulses are set.

4. Operating method according to one of the claims 1 to 3, wherein the course of the edge(s) is set directly through circuitry, or wherein the course of the edge(s) is controlled by circuitry wherein a predetermined setpoint of the course is compared with an actual course.

5. Operating method according to one of the claims 1 to 4, wherein the course of the flank(s) is measured directly by means of a light sensor (5) or indirectly by means of electrical variables.

6. Operating method according to one of the claims 1 to 5, wherein the course of the flank(s) is determined indirectly by means of a measurement of the voltage drop across the OLED (2), or by means of a measurement of characteristic parameters of the OLED (2) and a comparison with corresponding previously stored reference parameters.

7. Operating method according to one of the claims 1 to 6, wherein the OLED (2) is so operated that its luminous intensity during the PWM gaps always lies above a predetermined first threshold value, for example by the width of the PWM gaps being limited.

8. Operating method according to one of the claims 1 to 7, wherein the OLED (2) is so operated that the smallest possible PWM gap is always set for a desired average luminous intensity.

9. Operating method according to one of the claims 7 to 8, wherein a downward dimming of the mean luminous intensity of the OLED (2) is achieved by a narrowing of the PWMpulse or by amplitude modulation in the case where widening the PWM gaps lowers the luminous intensity of the OLED (2) in the PWM gaps under the first drops.

10. Operating circuit (1) for PWM control of at least one organic light-emitting diode OLED (2), comprising:
- a driver unit (3) for supplying the OLEDs (2) with PWM pulses;
- a control unit (4) for controlling the OLED (2);
- a measuring unit (5, 6, 7) to detect directly or indirectly the course of one or more rising or falling edges of the brightness of the OLED (2) at the beginning or end of a PWM pulseof the OLED (2);
- wherein the control unit (4) is designed to adjust the current amplitude of the PWM pulse as a function of the detected course of the edge(s).

11. Operating circuit (1) according to claim 10, wherein the measuring unit is a light sensor (5) which directly measures the course of the edge(s), or a voltage measuring device (6) which detects the course of the edge(s) indirectly on the basis of the voltage drop across the OLED (2).

12. Operating circuit (1) according to claim 10, further comprising a memory (8) for storing reference characteristics of the OLED (2), and
wherein the control unit (4) is adapted to compare the measurement of the measuring unit (5, 6, 7) with the reference characteristics in order to indirectly determine the course of the edge(s).

## Revendications

1. Procédé de fonctionnement d'au moins une diode électroluminescente organique OLED (2),
- l'OLED (2) étant alimentée en impulsions de courant PWM,
- l'allure d'un ou de plusieurs flancs montants ou descendants de la luminosité de l'OLED (2) étant détectée directement ou indirectement au début ou à la fin d'une impulsion de courant PWM de l'OLED (2) ; et
- l'amplitude de courant des impulsions de courant PWM étant réglée en fonction de l'allure détectée du/des flancs.

2. Procédé de fonctionnement selon la revendication 1, l'allure du/des flanc(s) étant détectée en continu, ou étant détectée par une un plusieurs mesures discrètes, par exemple au moment d'une temporisation après la mise hors circuit de l'impulsion de courant PWM.

3. Procédé de fonctionnement selon l'une des revendications 1 à 2, de futures impulsions de courant PWM étant réglées.

4. Procédé de fonctionnement selon l'une des revendications 1 à 3, l'allure du/des flanc(s) étant réglée directement par circuit, ou l'allure du/des flanc(s) étant régulée par circuit par le fait qu'une valeur de consigne prescrite de l'allure est comparée à une allure effective.

5. Procédé de fonctionnement selon l'une des revendications 1 à 4, l'allure du/des flanc(s) étant mesurée directement au moyen d'un capteur de lumière (5) ou indirectement à l'aide de grandeurs de mesure électriques.

6. Procédé de fonctionnement selon l'une des revendications 1 à 5, l'allure du/des flanc(s) étant définie indirectement à l'aide d'une mesure de la tension chutant au niveau de l'OLED (2), ou à l'aide d'une mesure de paramètres caractéristiques de l'OLED (2) et d'une comparaison avec des paramètres de référence correspondants enregistrés précédemment.

7. Procédé de fonctionnement selon l'une des revendications 1 à 6, l'OLED (2) étant mise en oeuvre de telle sorte que son intensité lumineuse pendant les espaces entre les impulsions PWM est constamment supérieure à une première valeur de seuil prédéfinie par le fait par exemple que la largeur des espaces entre les impulsions PWM est limitée.

8. Procédé de fonctionnement selon l'une des revendications 1 à 7, l'OLED (2) étant mise en oeuvre de telle sorte que, pour une intensité lumineuse moyenne souhaitée, c'est constamment le plus petit espace possible entre les impulsions PWM qui est réglé.

9. Procédé de fonctionnement selon l'une des revendications 7 à 8, une gradation descendante de l'intensité lumineuse moyenne de l'OLED (2) étant obtenue par un rétrécissement des impulsions de courant PWM ou par modulation d'amplitude dans le cas où, du fait d'un élargissement des espaces entre les impulsions PWM, l'intensité lumineuse de l'OLED (2) dans les espaces entre les impulsions PWM passe sous la première valeur de seuil.

10. Circuit de commande (1) destiné au pilotage PWM d'au moins une diode électroluminescente organique OLED (2), qui présente :
- une unité de circuit d'attaque (3) destinée à alimenter l'OLED (2) en impulsions de courant PWM ;
- une unité de commande (4) destinée à commander l'OLED (2) ;
- une unité de mesure (5, 6, 7) destinée à détecter directement ou indirectement l'allure d'un ou de plusieurs flancs montants ou descendants de la luminosité de l'OLED (2) au début ou à la fin d'une impulsion de courant PWM de l'OLED (2) ;
- l'unité de commande (4) étant conçue pour régler l'amplitude de courant des impulsions de courant PWM en fonction de l'allure détectée du/des flanc(s).

11. Circuit de commande (1) selon la revendication 10, l'unité de mesure étant un capteur de lumière (5) qui mesure directement l'allure du/des flanc (s), ou un appareil de mesure de tension (6) qui définit l'allure du/des flanc(s) indirectement à l'aide de la tension chutant au niveau de l'OLED (2).

12. Circuit de commande (1) selon la revendication 10, qui comprend en outre une mémoire (8) destinée à enregistrer des caractéristiques de référence de l'OLED (2), et
l'unité de commande (4) étant appropriée pour comparer la mesure de l'unité de mesure (5, 6, 7) avec les caractéristiques de référence pour définir indirectement l'allure du/des flanc(s).
